# EUROPÄISCHE PATENTSCHRIFT

(11) **EP 0 360 026 B1**
(45) Veröffentlichungstag und Bekanntmachung des Hinweises auf die Patenterteilung: **10.03.1993**
(21) Anmeldenummer: 89115653.1
(22) Anmeldetag: 25.08.1989
(51) Int. Cl.: H04N 7/14, H04N 7/13

(54) **Gegenseheinrichtung**
Two-way vision device
Dispositif de vision à deux directions

(30) Priorität: 17.09.1988 DE 3831643
(43) Veröffentlichungstag der Anmeldung: 28.03.1990
(73) Patentinhaber: ROBERT BOSCH GMBH, 70442 Stuttgart (DE)
(72) Erfinder: Behrens, Andreas, D-3207 Harsum (DE)

(56) Entgegenhaltungen:
- DE-B- 2 551 664
- NACHRICHTENTECHNISCHE ZEITSCHRIFT ntz, Band 42, 1989, Heft 3, Berlin DIETMAR BIERE, WERNER MEURE, THOMAS KUMMEROW "Video-Codex und Endgeräte für das ISDN- Bildtelefon" Seiten 136-145
- FUNKSCHAU 24/1985, MUnchen WALTER BAIER "Von Studio zu Studio mit 2 M Bit/s" Seiten 49-51

## Beschreibung

Die Erfindung geht aus von einer Gegenseheinrichtung nach der Gattung des Hauptanspruchs.

Bei bekannten Gegenseheinrichtungen, insbesondere bei einem bekannten Schmalband-Bildtelefon, ist die Darstellung des aufgenommenen Bildes in der gleichen Endeinrichtung (Eigenbilddarstellung) vorgesehen, um eine Überprüfung der zu übertragenden Signale zu ermöglichen. Bei einem bekannten Schmalband-Bildtelefon - TX90 der Fa. Telenorma - wird zur Erzielung einer ausreichend hohen Datenreduktion eine DPCM-Codierung angewendet, zu welcher ein Bildspeicher benötigt wird. Zur weiteren Datenreduzierung ist vor der DPCM-Codierung ein weiterer Bildspeicher vorgesehen, aus welchem nur jedes n-te Bild ausgelesen wird.

In einer zugehörigen Empfangseinrichtung ist zur Rekonstruktion des Bildes mindestens ein Bildspeicher erforderlich. Der Inhalt dieses Empfangsspeichers entspricht bei einwandfreier Übertragung des datenreduzierten Signals dem Inhalt des Schleifenspeichers innerhalb der Sendeeinrichtung. Somit kann an sich der Inhalt des Schleifenspeichers zur Kontrolle der zu übertragenden Signale verwendet werden. Bei DPCM-Codern mit hoher Datenreduktion, insbesondere solchen, die eine diskrete Cosinustransformation umfassen, werden jedoch die Signale aus dem Schleifenspeicher in einer Folge ausgelesen, die für eine Darstellung mit Hilfe einer Bildwiedergabeeinrichtung, insbesondere einer Kathodenstrahlröhre, nicht geeignet ist.

Aufgabe der vorliegenden Erfindung ist es, eine Gegenseheinrichtung vorzuschlagen, mit welcher eine Darstellung des Eigenbildes in möglichst einfacher Weise möglich ist, wobei die Wirkung der datenreduzierenden Codierung beobachtet werden kann.

Die erfindungsgemäße Gegenseheinrichtung mit den kennzeichnenden Merkmalen des Hauptanspruchs hat den Vorteil, daß die Darstellung des Eigenbildes in gleicher Weise wie die Darstellung des Bildes in der Empfangseinrichtung erfolgt. So kann beispielsweise ein Benutzer der erfindungsgemäßen Gegenseheinrichtung bei einem völlig neuen Bildinhalt erkennen, wann das neue Bild vollständig übertragen ist, und mit einer etwaigen Erläuterung des Bildinhalts solange warten.

Außerdem hat die erfindungsgemäße Gegenseheinrichtung den Vorteil, daß zum Schreiben in den ersten Bildspeicher und zum Lesen aus dem dritten Bildspeicher nur ein Adressengenerator erforderlich ist.

Durch die in den Unteransprüchen aufgeführten Maßnahmen sind vorteilhafte Weiterbildungen und Verbesserungen der im Hauptanspruch angegebenen Erfindung möglich.

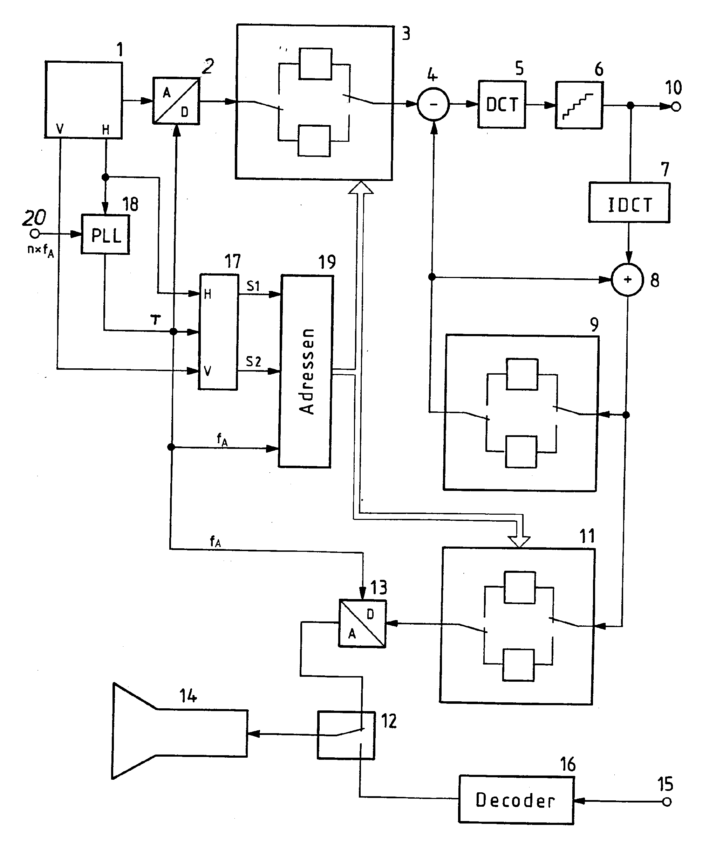

Ausführungsbeispiele der Erfindung sind in der Zeichnung dargestellt und in der nachfolgenden Beschreibung näher erläutert.

Die Zeichnung stellt als Blockschaltbild diejenigen Teile einer Gegenseheinrichtung dar, welche zur Erläuterung der Erfindung erforderlich sind.

Die Ausgangssignale einer Videokamera 1 werden in einem Analog/Digital-Wandler 2 in digitale Videosignale umgewandelt und in einem ersten Bildspeicher 3 zwischengespeichert. Der erste Bildspeicher 3 dient zur zeitlichen Datenreduktion und besteht wie die im folgenden erläuterten weiteren Bildspeicher aus jeweils zwei Speichern, die abwechselnd beschrieben und ausgelesen werden. In einen der Speicher wird eine Anzahl von Bildern (beispielsweise sechs Halbbilder) eingeschrieben, wobei mit jeweils einem Bild das vorangegangene überschrieben wird. Danach wird eine gleiche Anzahl von Bildern in den anderen Speicher eingeschrieben, während aus dem einen Speicher das zuletzt eingeschriebene Bild ausgelesen wird, usw.

Die aus dem ersten Bildspeicher 3 ausgelesenen digitalen Videosignale werden einer DPCM-Schleife (auch Prädiktionsschleife genannt) zugeführt, die im wesentlichen aus einer Subtraktionsschaltung 4, einer Schaltung 5 zur diskreten Cosinustransformation, einem Quantisierer 6, einer Schaltung 7 zur inversen diskreten Cosinustransformation, einem Addierer 8 und einem zweiten Bildspeicher 9, der als Prädiktionsspeicher dient, besteht. Die Ausgangssignale des Quantisierers 6 werden über einen Ausgang 10, gegebenenfalls nach einer weiteren geeigneten Codierung über einen nicht dargestellten Übertragungskanal einem Empfänger zugeführt.

In an sich bekannter Weise verfügt der Empfänger über einen dem Prädiktionsspeicher 9 entsprechenden Speicher, in welchem sich grundsätzlich der gleiche Inhalt wie im Prädiktionsspeicher 9 befindet.

In einen dritten Bildspeicher 11 werden die gleichen Signale wie in den Prädiktionsspeicher 9 eingeschrieben. Ein Ausgang des dritten Bildspeichers 11 ist über eine Umschalteinrichtung 12 und einen Digital/Analog-Wandler 13 mit einer Bildwiedergabeeinrichtung 14 verbunden, die der Einfachheit halber in der Zeichnung als Bildröhre dargestellt ist. Mit Hilfe der Umschalteinrichtung 12 können entweder die aus dem dritten Bildspeicher 11 ausgelesenen, das eigene Bild darstellende Signale oder die über einen Eingang 15 und den Decoder eines Empfängers 16 von einer Gegenstation empfangenen Signale wiedergegeben werden. Auch eine Eintastung des Eigenbildes in das empfangene Bild (Bild in Bild) kann vorgesehen sein.

In an sich bekannter Weise enthält die Kamera 1 einen Synchronsignalgenerator, dem Synchronsignale H und V entnommen werden. Bei 20 wird ein Signal mit einem Vielfachen der Abtastfrequenz f_{A} zugeführt. In einer PLL-Schaltung 18 wird das Taktsignal T erzeugt, das mit dem Synchronsignal H verkoppelt ist. Das Taktsignal T und die Synchronsignale H und V werden einer Impulsformerschaltung 17 zugeführt, in welcher Signale S1 und S2 abgeleitet werden, welche den Anfang jeweils eines Bildes und jeweils einer Zeile kennzeichnen.

Das Taktsignal T sowie die beiden Signale S1, S2 werden einem Adressengenerator 19 zugeleitet, der in an sich bekannter Weise im wesentlichen durch Zählen von Taktimpulsen T unter Berücksichtigung der Signale S1 und S2 Adressen für den sichtbaren Bildanteil erzeugt. Diese Adressen werden dem ersten Bildspeicher 3 als Schreibadressen und dem dritten Bildspeicher 11 als Leseadressen zugeführt.

Da bei denjenigen Schmalband-Telefonen, bei welchen eine zeitliche Unterabtastung durch Übertragung nur jedes n-ten Bildes erfolgt, beim Empfänger ein Bildwiederholspeicher erforderlich ist, kann gegebenenfalls der dritte Bildspeicher 11 eingangsseitig umschaltbar ausgeführt sein. Er kann dann zur Darstellung des Eigenbildes entsprechend der Zeichnung an die DPCM-Schleife des Coders oder als Bildwiederholspeicher an eine Einrichtung zum Empfang der Signale einer Gegenstation angeschlossen werden.

## Patentansprüche

1. Gegenseheinrichtung, bei welcher die von einer Videokamera (1) erzeugten Videosignale in einem ersten Bildspeicher (3) zwischenspeicherbar und über eine DPCM-Schleife (4-9), die einen zweiten Bildspeicher (9) enthält, mit reduzierter Datenrate zur Übertragung auslesbar sind,
dadurch gekennzeichnet,
daß die dem zweiten Bildspeicher (9) zuführbaren Signale ferner einem getrennt von der DPCM-Schleife wirksamen dritten Bildspeicher (11) zuführbar sind, dessen Ausgang zur Darstellung des in datenreduziert codierter Form gespeicherten Eingenbildes mit einer Bildwiedergabeeinrichtung (14) verbunden ist, und daß Adressen erzeugt werden, welche jeweils die Lage von Bildelementen darstellen und sowohl dem ersten Bildspeicher (3) als Schreibadressen als auch dem dritten Bildspeicher (11) als Leseadressen zuführbar sind.

2. Gegenseheinrichtung nach Anspruch 1,
dadurch gekennzeichnet,
daß die Bildspeicher aus je zwei Speichern bestehen, die abwechselnd zum Schreiben und Lesen verwendet werden.

3. Gegenseheinrichtung nach Anspruch 1,
dadurch gekennzeichnet,
daß der Ausgang des dritten Bildspeichers (11) über einen Digital/Analog-Wandler (13) mit der Bildwiedergabeeinrichtung (14) verbunden ist.

4. Gegenseheinrichtung nach Anspruch 3,
dadurch gekennzeichnet,
daß zwischen dem Ausgang des Digital/Analog-Wandlers (13) und der Bildwiedergabeeinrichtung (14) eine Umschalteinrichtung (12) vorgesehen ist, die ferner mit dem Signalausgang des Empfängers (16) für Signale der Gegenstation verbunden ist.

## Claims

1. Videophone in which the video signals generated by a video camera (1) can be buffered in a first frame store (3) and read out via a DPCM loop (4-9), which contains a second frame store (9), at a reduced data rate for transmission, characterised in that the signals which can be fed to the second frame store (9) can further be fed to a third frame store (11), which acts separately from the DPCM loop and whose output is connected, for the purpose of representing one's own frame stored in data-reduced coded form, to an image reproduction device (14), and in that addresses are generated which respectively represent the position of image elements and can be fed both to the first frame store (3) as write addresses and to the third frame store (11) as read addresses.

2. Videophone according to Claims 1, characterised in that the frame stores consist in each case of two memories which are used alternately for writing and reading.

3. Videophone according to Claim 1, characterised in that the output of the third frame store (11) is connected via the digital/analog converter (13) to the image reproduction device (14).

4. Videophone according to Claim 3, characterised in that there is provided between the output of the digital/ analog converter (13) and the image reproduction device (14) a changeover device (12) which is, furthermore, connected to the signal output of the receiver (16) for signals from the distant station.

## Revendications

1. Dispositif de vision à deux directions dans lequel les signaux vidéo produits par une caméra vidéo (1) sont susceptibles d'être mémorisés d'une façon intermédiaire dans une première mémoire d'image (3) et d'être lus avec un taux de données réduit pour la transmission par l'intermédiaire d'une boucle DPCM (4 - 9), qui comprend une seconde mémoire d'image (9), dispositif de vision à deux directions caractérisé en ce que les signaux susceptibles d'être appliqués à la seconde mémoire d'image (9) sont en outre susceptibles d'être appliqués à une troisième mémoire d'image (11) intervenant séparément de la boucle DPCM et dont la sortie, pour la représentation de l'image propre mémorisée sous la forme codée réduite en données, est reliée à un dispositif de reproduction d'image (14), et en ce que des adresses sont produites, qui représentent respectivement les positions des éléments d'image et peuvent être appliquées aussi bien à la première mémoire d'image (3) en tant qu'adresses d'inscription qu'également à la troisième mémoire d'image (11) en tant qu'adresses de lecture.

2. Dispositif de vision à deux directions, selon la revendication 1, caractérisé en ce que les mémoires d'images sont chacune constituées par deux mémoires, qui sont utilisées alternativement pour l'inscription et la lecture.

3. Dispositif de vision à deux directions selon la revendication 1, caractérisé en ce que la sortie de la troisième mémoire d'image (11) est reliée par l'intermédiaire d'un convertisseur numérique analogique (13) au dispositif de reproduction d'image (14).

4. Dispositif de vision à deux directions, selon la revendication 3, caractérisé en ce que, entre la sortie du convertisseur numérique-analogique (13) et le dispositif de reproduction d'image (14) est prévu un dispositif de commutation (12), qui est en outre relié à la sortie des signaux du récepteur (16) pour les signaux de la contre station.
